Europäisches Patentamt

European Patent Office

Office européen des brevets

(11) Numéro de publication: **0 077 258**
**B1**

## (12) FASCICULE DE BREVET EUROPEEN

(45) Date de publication du fascicule du brevet: **18.03.87**

(51) Int. Cl.⁴: **G 21 C 17/02,** G 01 N 15/06

(21) Numéro de dépôt: **82401829.5**

(22) Date de dépôt: **06.10.82**

(54) **Procédé pour déterminer la concentration en produits solides insolubles d'un liquide circulant dans un circuit tel qu'un circuit primaire de réacteur nucléaire à eau pressurisée et dispositif de prélèvement d'échantillons pour la mise en oeuvre de ce procédé.**

(30) Priorité: **13.10.81 FR 8119241**

(43) Date de publication de la demande:
**20.04.83 Bulletin 83/16**

(45) Mention de la délivrance du brevet:
**18.03.87 Bulletin 87/12**

(84) Etats contractants désignés:
**BE CH DE GB IT LI NL**

(56) Documents cités:
**FR-A-2 099 682**
**FR-A-2 164 697**
**GB-A-1 278 784**
**US-A-3 709 614**

(73) Titulaire: **COMMISSARIAT A L'ENERGIE ATOMIQUE Etablissement de Caractère Scientifique Technique et Industriel 31/33, rue de la Fédération F-75015 Paris (FR)**

(72) Inventeur: **Dolle, Lucien La Butte à la Reine 12, rue de la Pie Voleuse F-91120 Palaiseau (FR)**

(74) Mandataire: **Mongrédien, André et al c/o BREVATOME 25, rue de Ponthieu F-75008 Paris (FR)**

Courier Press, Leamington Spa, England.

## Description

La présente invention a pour objet un procédé pour déterminer la concentration en produits solides, insolubles d'un liquide circulant dans un circuit tel qu'un circuit primaire de réacteur nucléaire à eau pressurisée et un dispositif de prélèvement d'échantillons pour la mise en oeuvre de ce procédé.

Dans le circuit primaire d'un réacteur nucléaire à eau pressurisée, qui est généralement réalisé en acier inoxydable, en alliage de nickel, par exemple en Inconel, ou en stellite, il se produit une certaine corrosion du circuit qui entraîne la formation de produits de corrosion constitués par des oxydes métalliques tels que des oxydes de fer et certains oxydes mixtes de fer, qui sont solubles en partie dans l'eau du circuit. Ces oxydes métalliques ont une solubilité dans l'eau qui diminue lorsque la température augmente; de ce fait, étant donné que l'eau du circuit primaire d'un réacteur nucléaire est à température élevée, celle-ci se charge en produits de corrosion solides, insolubles, sous forme de particules de très petites dimensions, ce qui peut entraîner une certaine contamination et éventuellement une détérioration de certaines parties du circuit en raison de la formation de dépôts solides. Aussi, il est nécessaire de contrôler, au cours du fonctionnement du réacteur, la teneur en produits de corrosion solides, insolubles de l'eau du circuit primaire.

Cependant, cette opération de contrôle pose certains problèmes, d'une part, en raison de la dimension très faible, des particules de produits de corrosion solides, insolubles et, d'autre part, en raison des variations importantes de solubilité dans l'eau de ces produits entre la température ambiante et la température de fonctionnement du réacteur. Ainsi, les techniques de détermination de la quantité de produits de corrosion solides faisant appel à une opération préliminaire de filtration par les moyens actuellement connus sont peu adaptées, car il est difficile d'obtenir une séparation quantitative des particules en raison de leurs dimensions très faibles.

On connaît toutefois par le brevet français FR—A—2 164 697 un dispositif de filtration électromagnétique capable de séparer des particules aussi fines avec une efficacité proche de 100%, mais dans ce cas il est difficile de déterminer avec exactitude la quantité de particules séparées.

On connaît aussi un procédé qui permet de mesurer la quantité de particules retenues sur un filtre en effectuant une mesure différentielle sur deux échantillons dont l'un seulement est soumis à une opération de filtration, comme il est décrit dans le brevet anglais GB—A—1 278 784 où l'on analyse les échantillons par absorption ou réflexion d'un rayonnement électromagnétique.

Cependant, cette technique d'analyse à la température ambiante des échantillons prélevés dans le circuit ne permet pas d'obtenir des résultats satisfaisants car à la température ambiante, la solubilité des produits de corrosion solides est beaucoup plus importante. Ceci est d'autant plus gênant que les concentrations à mesurer sont généralement très faibles, par exemple de l'ordre de 1 à 100 microgrammes par kilogramme d'eau.

De plus, lors du prélèvement, les particules solides de produits de corrosion qui ont des dimensions très faibles, de l'ordre de quelques microns à quelques dixièmes de microns, risquent de se fixer dans le dispositif de prélèvement et de ne pas être prises en compte lors de l'analyse ultérieure de l'échantillon.

La présente invention a précisément pour objet un procédé pour déterminer la concentration en produits solides, insolubles d'un liquide circulant à une température T dans un circuit, qui pallie les inconvénients précités.

Ce procédé consiste à prélever un premier échantillon A et un second échantillon B du liquide circulant dans le circuit, à traiter l'échantillon A pour séparer les produits solides qu'il contient et à analyser l'échantillon A ainsi traité et l'échantillon B pour déterminer leurs teneurs respectives en produits solides, et il se caractérise en ce que le liquide circulant dans ledit circuit est à une température T différente de la température ambiante et la solubilité des produits varie entre la température ambiante et la température T dudit circuit, on traite l'échantillon A pour séparer à la température T du circuit les produits solides insolubles qu'il contient, on amène l'échantillon A ainsi traité et l'échantillon B à la température ambiante, on analyse les échantillons A et B pour déterminer leurs teneurs respectives en lesdits produits à l'état soluble et à l'état insoluble, et on détermine par différence entre les deux teneurs obtenues précédemment la concentration en produits solides, insolubles du liquide circulant à la température T dans ledit circuit.

Lorsque le liquide circulant dans le circuit est à une pression P supérieure à la pression atmosphérique, on ramène avantageusement la pression des échantillons A et B à la pression atmosphérique avant d'analyser les échantillons A et B.

Selon un mode préféré de mise en oeuvre du procédé de l'invention, on utilise un filtre électromagnétique pour séparer à la température T les produits solides de l'échantillon A. En effet, l'utilisation d'un tel filtre se révèle particulièrement avantageuse car elle permet d'obtenir une efficacité de séparation proche de 100%.

Selon le procédé de l'invention, on effectue une mesure différentielle entre deux échantillons dont l'un (échantillon A) contient uniquement les produits solubles à la température T de fonctionnement du circuit, et l'autre (échantillon B) contient la totalité des produits considérés, solubles et insolubles, présents dans le liquide du circuit. Ainsi, en utilisant des procédés d'analyse classiques et en effectuant l'analyse à une température proche de l'ambiante, on peut obtenir avec une grande reproductivité et une grande fiabilité la concentration réelle en produits solides du liquide circulant dans le circuit.

Selon l'invention, l'analyse des échantillons A et B est réalisée par des méthodes classiques, par exemple par colorimétrie ou par spectrométrie d'émission.

L'invention a également pour objet un dispositif pour la mise en oeuvre du procédé décrit ci-dessus.

Ce dispositif comprend des moyens pour prélever simultanément à la température T un premier échantillon A et un second échantillon B du liquide circulant dans le circuit et des moyens pour séparer à la température T les produits solides insolubles présents dans l'échantillon A, et il se caractérise en ce qu'il comprend en outre:

— des moyens pour recueillir l'échantillon A ainsi traité et l'échantillon B,
— des moyens pour amener de la température T dudit circuit à la température ambiante les échantillons A et B, et
— des moyens pour déterminer la concentration des échantillons A et B en lesdits produits, à l'état soluble et à l'état insoluble.

Selon une caractéristique avantageuse de ce dispositif, les moyens pour prélever simultanément l'échantillon A et l'échantillon B sont constitués par une conduit de prélèvement débouchant d'une part dans ledit circuit, et raccordée d'autre part à deux lignes de prélèvement isocinétiques ayant le même débit.

Selon un mode préféré de réalisation de ce dispositif, les moyens pour séparer à la température T les produits solides, insolubles, de l'échantillon A sont constitués par un filtre électromagnétique miniaturisé.

Un tel filtre comprend généralement un tube en matériau non magnétique rempli d'un garnissage de billes d'acier magnétique et des moyens pour appliquer un champ magnétique audit garnissage.

Ce filtre qui est d'un type classique, tel que celui décrit dans le brevet français FR—A—2.164.697, peut être utilisé avec une efficacité de séparation proche de 100%, si l'on adopte les conditions de fonctionnement définies dans le rapport L. Dollé, J. Chenouard, P. Fauvet, R. Darras, et M. Dubourg "High temperature electromagnetic extraction of corrosion products in electronuclear power plants" présenté à la conférence Water Chemistry II BNES, 1980, paper 40.

Selon l'invention, pour améliorer encore l'efficacité de séparation du filtre, on utilise de préférence un filtre ayant des caractéristiques géométriques particulières afin de rendre négligeables les effets des passages préférentiels du liquide le long de la paroi du filtre.

Dans ce but, le diamètre $d_1$ des billes et le diamètre $d_2$ du tube sont tels que le rapport $d_1/d_2$ soit au plus égal à 1/10.

Avantageusement, notamment lorsque les moyens de prélèvement sont constitués par deux lignes de prélèvement fonctionnant au même débit, le dispositif comprend des moyens pour délivrer au même débit l'échantillon A traité et l'échantillon B.

Ces moyens sont avantageusement constitués par des tubulures de faible diamètre et de grande longueur, ayant respectivement des longueurs telles qu'on ramène la pression et la température des échantillons A et B à des valeurs sensiblement identiques.

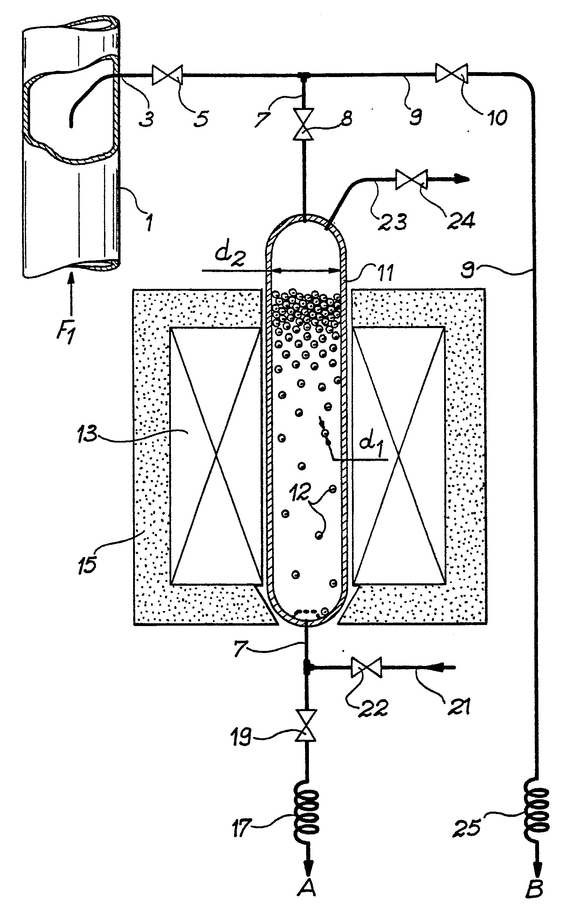

D'autres caractéristiques et avantages de l'invention apparaîtront mieux à la lecture de la description qui suit donnée bien entendu à titre illustratif et non limitatif, en référence à la figure an-annexée qui représente schématiquement un dispositif de prélèvement des échantillons A et B pour la mise en oeuvre du procédé de l'invention.

Sur cette figure, on voit une conduite 1 faisant partie du circuit dans lequel circule à une température T et sous une pression P le liquide dont on veut déterminer la concentration en produits solides insolubles, constitués par exemple par des produits des corrosion. Cette conduite 1 peut être constituée par une conduite principale du circuit primaire d'un réacteur nucléaire à eau pressurisée fonctionnant à une température d'environ 300°C sous une pression de l'ordre de 150 bars soit environ $150.10^5$ Pa. Dans cette conduite, 1 débouche une tubulure 3 qui permet d'assurer le prélèvement des échantillons de liquide circulant dans la conduite dans le sens de la flèche $F_1$. Cette tubulure 3 peut être constituée par un simple piquage soudé sur la conduite 1 ou au contraire être constituée par un ajutage en forme de tube de Pitot qui plonge dans la veine liquide circulant dans la conduite 1. Cette tubulure 3 est munie d'une vanne d'arrêt 5 et elle se divise ensuite en deux lignes de prélèvement 7 et 9 ayant les mêmes débits, munies respectivement des vannes 8 et 10 ce qui permet d'obtenir la sécurité requise dans le cas d'un circuit primaire de réacteur nucléaire, c'est-à-dire la disposition de deux vannes en série sur toute tubulure reliant la conduite principale 1 à l'atmosphère.

La ligne de prélèvement 7 débouche dans un filtre électromagnétique qui comprend un tube 11 en acier non magnétique rempli d'un garnissage 12 de billes d'acier magnétique, une bobine coaxiale 13 qui sert à engendrer le champ magnétique et est alimentée par une source de courant continu (non représentée), et une armature 15 en fer doux enveloppant la bobine coaxiale 13 pour supprimer le champ de fuite et améliorer l'aimantation du garnissage de billes au niveau des extrémités du tube 11.

A la sortie du filtre électromagnétique, la ligne 7 se prolonge par un tube 17 de grande longueur et de faible diamètre, par exemple de 0,1 à 0,3 cm de diamètre et de plusieurs dizaines de mètres de longueur qui permet de réduire la pression et la température du liquide circulant dans la ligne de prélèvement 7 et de délivrer à sa sortie un échantillon A de liquide refroidi avec un débit constant et une pression choisie.

Avant son raccordement avec le tube 17, la ligne 7 est équipée d'une vanne 19 qui permet de réaliser en liaison avec la vanne 8, l'isolement du filtre en vue de son rinçage.

Pour ce rinçage, le dispositif comprend deux conduites 21 et 23 équipées respectivement des vannes 22 et 24. Ainsi, on peut effectuer le rinçage du filtre en introduisant le liquide de rinçage par la conduite 21 et en l'évacuant par la conduite 23 qui est munie en amont de la vanne 24 d'une grille (non représentée sur le dessin) dont les passages sont suffisamment étroits pour empêcher l'entraînement des billes 12 dans la conduite 23.

L'autre ligne de prélèvement 9 qui comprend la vanne 10 se prolonge également à son extrémité inférieure par un tube 25 de faible diamètre et de grande longueur par exemple de 0,1 à 0,3 cm de diamètre et de plusieurs dizaines de mètres de longueur, qui sert également à réduire la pression et la température du liquide circulant dans la ligne de prélèvement 9 et permet de délivrer à sa sortie un échantillon B de liquide refroidi avec un débit constant identique à celui de la ligne 7 et une pression choisie.

On précise que les caractéristiques géométriques des tubes 17 et 25 sont telles qu'on accorde la perte de charge sur les deux lignes de prélèvement, afin d'obtenir à la sortie des tubes 17 et 25 des échantillons A et B, ayant le même débit, et sensiblement la même pression et la même température. La vitesse du liquide dans les deux tubes isocinétiques doit être supérieure à $1 \cdot m \cdot s^{-1}$.

En effet, compte tenu des concentrations très faibles à mesurer, il est important de faire circuler les échantillons A et B dans les lignes 17 et 25 dans les mêmes conditions de débit afin d'obtenir une bonne reproductivité des résultats. Par ailleurs, il est préférable de les ramener à la pression atmosphérique pour faciliter les mesures ultérieures.

Les tubes 17 et 25 peuvent être raccordés respectivement à des dispositifs d'analyse tels que des spectromètres d'émission ou des colorimètres afin de déterminer les concentrations des échantillons, en produits de corrosion solubles et insolubles.

De préférence, les tubes 17 et 25 sont réalisés en des matériaux tels que le zircalloy ou le titane, afin de s'assurer que la circulation d'eau dans ces tubes ne puisse conduire à la formation de produits de corrosion identiques à ceux qui prennent naissance dans le circuit 1, ce qui risquerait de fausser les résultats obtenus en ce qui concerne la mesure de concentration des échantillons A et B sortant des tubes 17 et 25.

Dans l'exemple de réalisation donné ci-dessus, les dimensions du filtre électromagnétique sont adaptées à la séparation des produits de corrosion solides à base d'oxydes de fer, présents dans l'eau du circuit primaire d'un réacteur nucléaire à eau pressurisée. Le tube 11 a un diamètre intérieur $d_2$ d'environ 25 mm, et une longueur de 25 cm, et il possède une paroi suffisamment épaisse pour résister à la pression du circuit 1 sur lequel sont prélevés les échantillons.

Ce tube est réalisé en acier austénitique non magnétique et il est garni de billes d'acier ayant un diamètre $d_1$ de 2 mm; la longueur du garnissage est limitée à 15 cm, ce qui·laisse un espace supplémentaire vide de 10 cm à la partie supérieure du tube. Ceci permet d'assurer une fluidisation du lit de billes 12 lors de l'opération de rinçage par mise en circulation d'eau de rinçage par les conduites 21 et 23 et de réaliser ainsi le rinçage dans le meilleures conditions afin d'obtenir une extraction complète des boues retenues dans les cavités du garnissage.

Le fonctionnement du dispositif est le suivant: on prélève un échantillon de liquide circulant dans la conduite 1 en ouvrant les vannes 5, 8 et 10, les vannes 22 et 24 étant fermées et la vanne 19 étant ouverte. Ainsi, on introduit respectivement dans les lignes 7 et 9 qui fonctionnant au même débit des quantités de liquide qui constitueront l'échantillon A et l'échantillon B. L'échantillon A qui circule dans la ligne 7 passe dans le filtre électromagnétique 11 dont la bobine 13 a été excitée pour appliquer à l'intérieur du garnissage un champ magnétique d'environ 0,2 à 0,3 Tesla ou un champ magnétique plus puissant si le liquide renferme des produits de corrosion constitués par des oxydes métalliques moins aimantables que les particules ferromagnétiques.

A la sortie du filtre électromagnétique, l'échantillon A ne contient plus de produits de corrosion solides et il est ramené à la pression atmosphérique et à la température ambiante après passage dans le tube 17.

L'échantillon B qui circule dans la ligne de prélèvement 9 est lui aussi ramené à la température ambiante et à la pression atmosphérique après passage dans le tube 25.

Ainsi, on obtient un échantillon A qui contient uniquement la fraction des produits de corrosion solubles à la température T du circuit et un échantillon B qui contient la totalité des produits de corrosion solubles et insolubles présents dans le liquide du circuit. On détermine alors la concentration en produits de corrosion solubles de l'échantillon A et la concentration en produits de corrosion solubles et non solubles de l'échantillon B, puis on détermine par différence entre les concentrations des échantillons B et A, la teneur réelle en produits de corrosion solides du liquide circulant à la température T dans la conduite 1.

Pour déterminer les concentrations en produits de corrosion des échantillons A et B, on utilise des techniques classiques telles que la spectrométrie d'émission ou la colorimétrie et on effectue ces analyses soit en ligne, soit en laboratoire.

Selon l'invention, pour maintenir une efficacité élevée du filtre électromagnétique au cours des différentes périodes d'échantillonnage, on fait fonctionner celui-ci en limitant sa charge à 20% de sa capacité utilisable, notamment lorsque la concentration en produits de corrosion solides du liquide à filtrer est très faible comme c'est le cas par exemple de l'eau du circuit primaire d'un réacteur nucléaire, dont la teneur en produits de corrosion solides est de l'ordre de 10 à 50 ppb (c'est-à-dire 10 à 50 parties en poids de produits de corrosion pour $10^9$ parties en poids d'eau), soit de 10 à 50 mg/t d'eau, Lorsque la charge du filtre atteint 20% de sa capacité, on procède au rinçage du filtre en fermant les vannes 8 et 19, en ouvrant les vannes 22 et 24 et en faisant circuler l'eau de rinçage de la canalisation 21 vers la conduite 23.

Avec un filtre présentant les caractéristiques géométriques définies ci-dessus, une charge limitée à 20% de sa capacité correspnd à une fixation d'environ 140 mg de produits de corrosion solides.

Aussi, si l'on admet que la concentration en produits de corrosion solides de l'eau circulant dans la conduite 1 se situe entre 10 et 50 ppb, on peut ainsi filtrer des quantités d'eau comprises entre 2 et 14 t, soit environ 2,8 à 20 m³ d'eau à la température du circuit primaire, sans qu'il soit nécessaire d'effectuer une opération de rinçage du filtre. Dans ces conditions, le filtre possède encore une autonomie suffisante. En effet, si la vitesse de l'eau dans le filtre est de 5 cm · s⁻¹ le débit du filtre électromagnétique atteint environ 90 l · h⁻¹ et il peut fonctionner pendant une durée nettement supérieure à 20 h sans que sa charge atteigne 20% de sa capacité.

Bien que dans cet exemple, on ait décrit la mise en oeuvre du procédé de l'invention pour mesurer la concentration en produits de corrosion solides insolubles d'un liquide à température et pression elevées, il va de soi que le procédé et le dispositif de l'invention peuvent être utilisés également pour déterminer la concentration en produits solides insolubles d'un liquide à basse température et basse pression, notamment lorsque la solubilité des produits solides augmente avec la température. Ils peuvent aussi être utilisés pbur déterminer la concentration en produits solides insolubles d'un liquide, ces produits étant susceptibles d'être retenus sur un filtre dans les cas où il est difficile ou impossible de mesurer la concentration des produits retenus sur ce filtre.

**Revendications**

1. Procédé pour déterminer la concentration en produits solides, insolubles d'une liquide circulant dans un circuit, consistant à prélever un premier échantillon A et un second échantillon B du liquide circulant dans le circuit, à traiter l'échantillon A pour séparer les produits solides qu'il contient et à analyser l'échantillon A ainsi traité et l'échantillon B pour déterminer leurs teneurs respectives en produits solides, caractérisé en ce que le liquide circulant dans ledit circuit est à une température T différente de la température ambiante et la solubilité des produits varie entre la température ambiante et la température T dudit circuit; en ce que l'on traite l'échantillon A pour séparer à la température T du circuit les produits solides insolubles qu'il contient; en ce que l'on amène l'échantillon A ainsi traité et l'échantillon B à la température ambiante; en ce que l'on analyse les échantillons A et B pour déterminer leurs teneurs respectives en lesdits produits à l'état soluble et à l'état insoluble; et en ce que l'on détermine par différence entre les deux teneurs obtenues précédemment la concentration en produits solides, insolubles du liquide circulant à la température T dans ledit circuit.

2. Procédé selon la revendication 1, caractérisé en ce que lesdits produits solides sont des produits de corrosion.

3. Procédé selon l'une quelconque des revendications 1 et 2, caractérisé en ce que le liquide circulant dans ledit circuit est à une pression P différente de la pression atmosphérique et en ce que l'on amène les échantillons A et B à la pression atmosphérique avant de les analyser.

4. Procédé selon l'une quelconque des revendications 1 à 3, caractérisé en ce que le liquide est de l'eau.

5. Procédé selon la revendication 4, caractérisé en ce que ledit circuit est le circuit primaire d'un réacteur nucléaire à eau.

6. Procédé selon l'une quelconque des revendications 1 à 5, caractérisé en ce que l'on utilise un filtre électromagnétique pour séparer les produits solides de l'échantillon A.

7. Procédé selon l'une quelconque des revendications 1 à 6, caractérisé en ce que l'on détermine les teneurs respectives des échantillons A et B en lesdits produits par colorimétrie.

8. Procédé selon l'une quelconque des revendications 1 à 6, caractérisé en ce que l'on détermine les teneurs respectives en lesdits produits des échantillons A et B par spectrométrie d'émission.

9. Dispositif pour la mise en oeuvre du procédé selon l'une quelconque des revendications 1 à 8, comprenant des moyens (3, 7, 9) pour prélever simultanément à la température T un premier échantillon A et un second échantillon B du liquide circulant dans le circuit, des moyens (11, 12) pour séparer à la température T les produits solides insolubles présents dans l'échantillon A, caractérisé en ce qu'il comprend en outre:

— des moyens pour recueillir l'échantillon A ainsi traité et l'échantillon B,
— des moyens (17, 25) pour amener de la température T dudit circuit à la température ambiante les échantillons A et B, et
— des moyens pour déterminer la concentration des échantillons A et B en lesdits produits à l'état soluble et à l'état insoluble.

10. Dispositif selon la revendication 9, caractérisé en ce que les moyens (3, 7, 9) pour prélever simultanément l'échantillon A et l'échantillon B sont constitués par une conduite de prélèvement débouchant d'une part dans ledit circuit, et raccordée d'autre part à deux lignes de prélèvement ayant le même débit.

11. Dispositif selon l'une quelconque des revendications 9 et 10, caractérisé en ce que lesdits moyens (11, 12) pour séparer les produits solides insolubles de l'échantillon A sont constitués par un filtre électromagnétique.

12. Dispositif selon la revendication 11, caractérisé en ce que le filtre électromagnétique comprend un tube en matériau non magnétique (11) rempli d'un garnissage de billes (12) d'acier magnétique et des moyens (13) pour appliquer un champ magnétique audit garnissage et en ce que le diamètre $d_1$ des billes d'acier et le diamètre $d_2$ du tube sont tels que le rapport $d_1/d_2$ soit au plus égal à 1/10.

13. Dispositif selon l'une quelconque des revendications 9 à 12, caractérisé en ce qu'il comprend des moyens isocinétiques (17, 25) pour délivrer au même débit l'échantillon A ainsi traité et l'échantillon B.

14. Dispositif selon la revendication 13, caractérisé en ce que lesdits moyens pour délivrer au même débit l'échantillon A ainsi traité et l'échantillon B sont constitués par des tubulures (17, 25) de faible diamètre et de grande longueur, ayant respectivement des longueurs telles qu'on ramène la pression et la température des échantillons A et B à des valeurs sensiblement identiques.

**Patentansprüche**

1. Verfahren zum Ermitteln der Konzentration von unlöslichen festen Stoffen in einer in einem Kreislauf fließenden Flüssigkeit, bei dem eine erste Probe A und eine zweite Probe B von der in dem Kreislauf fließenden Flüssigkeit genommen wird, die Probe A behandelt wird, um die in ihr enthaltenen festen Stoffe abzutrennen und die derart behandelte Probe A zu analysieren, und die Probe B behandelt wird, um ihren jeweiligen Gehalt an festen Stoffen zu bestimmen, dadurch gekennzeichnet, daß die in dem Kreislauf fließende Flüssigekeit eine Temperatur T aufweist, die von der Umgebungstemperatur unterschiedlich ist, und sich die Lösbarkeit der Stoffe zwischen der Umgebungstemperatur und der Temperatur T des Kreislaufs ändert; daß man die Probe A behandelt, um bei der Temperatur T des Kreislaufs die in ihr enthaltenen unlöslichen festen Stoffe abzutrennen; daß man die derart behandelte Probe A und die Probe B auf die Umgebungstemperatur bringt; daß man die Proben A und B analysiert, um den jeweiligen Gehalt an den Stoffen im gelösten und ungelösten Zustand zu bestimmen; und daß man mittels des Unterschiedes zwischen den beiden vorhergehend erhaltenen Gehalten die Konzentration der unlöslichen festen Stoffe der bei der Temperatur T in dem Kreislauf fließenden Flüssigkeit ermittelt.

2. Verfahren nach Anspruch 1, dadurch gekennzeichnet, daß die festen Stoffe Korrosionsprodukte sind.

3. Verfahren nach Anspruch 1 oder 2, dadurch gekennzeichnet, daß die in dem Kreislauf fließende Flüssigkeit einen vom Atmosphärendruck unterschiedlichen Druck P aufweist und daß man die Proben A und B vor deren Analyse auf Atmosphärendruck bringt.

4. Verfahren nach einem der Ansprüche 1 bis 3, dadurch gekennzeichnet, daß die Flüssigkeit Wasser ist.

5. Verfahren nach Anspruch 4, dadurch gekennzeichnet, daß der Kreislauf der Primärkreislauf eines Wasserreaktors ist.

6. Verfahren nach einem der Ansprüche 1 bis 5, dadurch gekennzeichnet, daß man ein elektromagnetisches Filter verwendet, um die festen Stoffe bei der Probe A abzutrennen.

7. Verfahren nach einem der Ansprüche 1 bis 6, dadurch gekennzeichnet, daß man die jeweiligen Gehalte der Proben A und B an den genannten Stoffen durch Kolorimetrie ermittelt.

8. Verfahren nach einem der Ansprüche 1 bis 6, dadurch gekennzeichnet, daß man den jeweiligen Gehalt an den genannten Stoffen in den Proben A und B durch Emissionsspektrometrie ermittelt.

9. Vorrichtung zur Durchführung des Verfahrens nach einem der Ansprüche 1 bis 8, mit Mitteln (3, 7, 9) zur gleichzeitigen Entnahme einer ersten Probe A und einer zweiten Probe B bei der Temperatur T von der in dem Kreislauf fließenden Flüssiget, mit Mitteln (11, 12), um bei der Temperatur T die in der Probe A vorhandenen, unlöslichen festen Stoffe abzutrennen, dadurch gekennzeichnet, daß die Vorrichtung ferner umfaßt:

— Mittel zum Sammeln der derart behandelten Probe A und der Probe B,
— Mittel (17, 25), um die Proben A und B von der Temperatur T des Kreislaufs auf die Umgebungstemperatur zu bringen, und
— Mittel, um bei den Proben A und B die Konzentration der genannten Stoffe im löslichen und unlöslichen Zustand zu bestimmen.

10. Vorrichtung nach Anspruch 9, dadurch gekennzeichnet, daß die Mittel (3, 7, 9) zum gleichzeitigen Entnehmen der Probe A und der Probe B von einer Entnahmeleitung gebildet sind die einerseits in den Kreislauf mündet und andererseits mit zwei Entnahmeleitung verbunden ist, die die gleiche Durchflußleistung haben.

11. Vorrichtung nach Anspruch 9 oder 10, dadurch gekennzeichnet, daß die Mittel (11, 12) zum Abtrennen der unlöslichen, festen Stoffe von der Probe A von einem elektromagnetischen Filter gebildet sind.

12. Vorrichtung nach Anspruch 11, dadurch gekennzeichnet, daß das elektromagnetische Filter ein Rohr (11) aus einem nichtmagnetischen Material, welches mit einer Kugelpackung (12) aus magnetischem Stahl gefüllt ist, und Mittel (13) umfaßt, um ein Magnetfeld auf die Packung anzuwenden, und daß der Durchmesser $d_1$ der Stahlkugeln und der Durchmesser $d_2$ des Rohres derart sind, daß das Verhältnis $d_1/d_2$ höchstens gleich 1/10 ist.

13. Vorrichtung nach einem der Ansprüche 9 bis 12, dadurch gekennzeichnet, daß sie gleichkinetische Mittel (17, 25) umfaßt, um mit der gleichen Durchflußleistung die derart behandelte Probe A und die Probe B abzugeben.

14. Vorrichtung nach Anspruch 13, dadurch gekennzeichnet, daß die Mittel zum Abgeben der derart behandelten Probe A und der Probe B mit der gleichen Durchflußleistung von Rohren (17, 25) geringen Durchmessers und großer Länge gebildet sind, die jeweils eine solche Länge aufweisen, daß der Druck und die Temperatur der Proben A und B auf im wesentlichen identische Werte gebracht werden.

**Claims**

1. Process for determining the concentration of insoluble solid products in a liquid circulating in a circuit, consisting in taking a first sample A and a second sample B of the liquid circulating in the circuit, in treating sample A to separate the solid products which it contains and in analysing sample A treated in this way and sample B to determine their respective contents of solid products, characterized in that the liquid circulating in the said circuit is at a temperature T other than ambient temperature and the solubility of the products varies between ambient temperature and the temperature T of the said circuit; in that sample A is treated to separate at the temperature T of the circuit the insoluble solid products which it contains; in that sample A treated in this way and sample B are brought to ambient temperature; in that samples A and B are analyzed to determine their respective contents of the said products in the soluble state and in the insoluble state; and in that the concentration of the insoluble solid products in the liquid circulating at the temperature T in the said circuit is determined by difference between the two contents obtained previously.

2. Process according to Claim 1, characterized in that the said solid products are corrosion products.

3. Process according to either of Claims 1 and 2, characterized in that the liquid circulating in the said circuit is at a pressure P other than atmospheric pressure and in that samples A and B are brought to atmospheric pressure before they are analysed.

4. Process according to any one of Claims 1 to 3, characterized in that the liquid is water.

5. Process according to Claim 4, characterized in that the said circuit is the primary circuit of a water nuclear reactor.

6. Process according to any one of Claims 1 to 5, characterized in that an electromagnetic filter is used to separate the solid products from sample A.

7. Process according to any one of Claims 1 to 6, characterized in that the respective contents of the said products in samples A and B are determined by colorimetry.

8. Process according to any one of Claims 1 to 6, characterized in that the respective contents of the said products in samples A and B are determined by emission spectrometry.

9. Device for implementing the process according to any one of Claims 1 to 8, comprising means (3, 7, 9) for simultaneously taking at the temperature T a first sample A and a second sample B of the liquid circulating in the circuit, means (11, 12) for separating off at the temperature T the insoluble solid products present in sample A, characterized in that it additionally comprises:

— means for collecting sample A treated in this way and sample B,
— means (17, 25) for bringing samples A and B from the temperature T of the said circuit to ambient temperature, and
— means for determining the concentration of the said products in the soluble state and in the insoluble state in samples A and B.

10. Device according to Claim 9, characterized in that the means (3, 7, 9) for simultaneously taking sample A and sample B consist of a sampling conduit opening, on the one hand into the said circuit, and connected, on the other hand, to two sampling lines having the same flow rate.

11. Device according to either of Claims 9 and 10, characterized in that the said means (11, 12) for separating the insoluble solid products from sample A consist of an electromagnetic filter.

12. Device according to Claim 11, characterized in that the electromagnetic filter comprises a tube made of nonmagnetic material (11) filled with a packing of magnetic steel balls (12) and means (13) for applying a magnetic field to the said packing and in that the diameter $d_1$ of the steel balls and the diameter $d_2$ of the tube are such that the ratio $d_1/d_2$ is at least equal to 1/10.

13. Device according to any one of Claims 9 to 12, characterized in that it comprises isokinetic means (17, 25) for delivering sample A treated in this way and sample B at the same flow rate.

14. Device according to Claim 13, characterized in that the said means for delivering sample A treated in this way and sample B at the same flow rate consist of small-diameter tubings (17, 25) of great length, being, respectively, of such lengths that the pressure and the temperature of samples A and B are brought to substantially identical values.